# EUROPEAN PATENT SPECIFICATION

(11) **EP 1 164 576 B1**
(45) Date of publication and mention of the grant of the patent: **22.02.2006**
(21) Application number: 00128291.2
(22) Date of filing: 22.12.2000
(51) Int. Cl.: G10L 17/00, H04M 3/38, H04M 3/493, G07C 9/00, G06F 1/00

(54) **Speaker authentication method and system from speech models**
System und Verfahren zur Sprechererkennung mittels Sprachmodellen
Système et méthode de vérification du locuteur à partir de modèles de voix

(30) Priority: 15.06.2000 EP 00112666
(43) Date of publication of application: 19.12.2001
(73) Proprietor: Swisscom Fixnet AG, 3050 Bern (CH)
(72) Inventor: Van Kommer, Robert, 1752 Villars-sur Glâne (CH)
(74) Representative: P&TS Patents & Technology Surveys SA

(56) References cited:
- WO-A-99/00719
- US-A- 6 081 782
- FURUI S: "Recent advances in speaker recognition" PATTERN RECOGNITION LETTERS, NORTH-HOLLAND PUBL. AMSTERDAM, NL, vol. 18, no. 9, 1 September 1997 (1997-09-01), pages 859-872, XP004102227 ISSN: 0167-8655
- SUNGJOO AHN ET AL: "Effective speaker adaptations for speaker verification" 2000 IEEE INTERNATIONAL CONFERENCE ON ACOUSTICS, SPEECH, AND SIGNAL PROCESSING. PROCEEDINGS (CAT. NO.00CH37100), ISTANBUL, TURKEY, 5-9 JUNE 2000, pages II1081-II1084 vol.2, XP002180588 2000, Piscataway, NJ, USA, IEEE, USA ISBN: 0-7803-6293-4

## Description

The present invention concerns a speaker authentication method and system. More specifically, the present invention concerns a multi-pass speech recognition and speaker authentication method for user authentication in a voice portal, and an improved voice portal.

### Prior art

Voice portals, for example in interactive voice response systems, are already known in which information can be stored and accessed by a plurality of users with spoken requests directly uttered in a microphone or transmitted through the telephone network and interpreted in the voice portal. Voice portals have the advantage that the information can be accessed without any prior knowledge and without any special equipment from any telephone terminal in the world.

Voice portals often can give access to confidential information, for example bank or medical information. The level of confidentiality, and the kind of information which may be stored in a voice portal, thus critically depend on a reliable identification of the authorized users, in order to authorize them or not.

In many conventional systems, users have to enter or to confirm their identity with a user identification and/or a password entered as DTMF codes on the keypad of the users' equipment. In many situations, like e.g. in cars, this solution proves unpractical. Moreover, user identifications and passwords are hard to remember and are often written down near the user's equipment, resulting in weak security.

It has already been suggested to authenticate users with a spoken identity uttered at the entry point of the dialogue with the voice portal. Speech recognition techniques have been used for recognizing the claimed identity and speaker verification techniques for verifying the claimed identity. In the next dialogue turn, the user is accepted or rejected if he is not registered in the portal or if the claimed identity cannot be verified.

Currently, the major trend in speech recognition and speaker verification technology is the Hidden Markov Model. This statistical method describes speech by a sequence of states (Markov states). These are linked by transition probabilities, to move from state to state and each state emits, via a certain probability distribution, a speech vector. Among the many weaknesses of HMMs, one could mention the poor robustness against a typical mismatch situation (the training and testing speech material is different). In the last years of research in the field of speech recognition, many researchers have concluded that the robustness of current methods is far from being comparable to what human beings could achieve.

Different methods have already been described to improve the robustness of speech recognition. It is known that the speaker verification accuracy improves when more speech material is available. Furthermore, some systems achieve better performance by using speaker-dependent speech models, which are usually learned during an enrollment session. However, most users would not accept having to spend the time necessary for this session. Besides, speaker-dependent recognition can only be used once the speaker has been identified, but not for recognizing the identity claimed by the user during the first turn of a dialogue.

Instead of learning a complete set of speech models for each user, several adaptation techniques have been described for adapting a good speaker-independent model set to a new speaker. If the adaptation data is available in one block, e.g. from a speaker enrollment session, one may use static adaptation methods. Alternatively, adaptation can proceed incrementally as adaptation data becomes available (incremental adaptation). In the case where the true transcription of the adaptation data is known, then it is termed supervised adaptation, whereas if the models are adapted with unlabelled speech material, then it is termed unsupervised adaptation. Known adaptation techniques comprise maximum likelihood linear regression (MLLR) techniques and maximum a posteriori (MAP) adaptation.

Other adaptation techniques do exist to adapt the models with the current noise captured from the line. Many systems are using a short moment of silence to do the modeling. That particular model is then combined with the original one. A two-pass system is described in the patent application EP-A2-0880126 which adapts the silence models by first segmenting the speech utterances and then adapting the silence modeling via unsupervised adaptation.

Speaker dependent speech models have also already been used for speaker recognition tasks. Sungjoo Ahn et al., in "Effective speaker adaptations for speaker verification", 2000 IEEE International Conference on Acoustics, speech and signal Processings, Istanbul, 5-9 June 2000, pages 1081-1084, for example, describes adaptation methods effectives with only a limited amount of enrollment data available. Sadoki Furui, in "Recent advances in speaker recognition", Pattern recognition letters, 1 September 1997, pages 859-872, is a general paper describing various advances in speaker recognition technology, including speaker dependent and text dependent schemes. Both documents still rely on a rather cumbersome , separate enrollment session for adapting the users speech model.

In a voice portal, all those adaptation techniques may be used for improving the speech models during the enrollment session and/or during the whole dialogue; the adapted models may even be stored in the system and used for speech recognition in future sessions. However, they cannot be used in each session until the speaker's identity has been recognized and/or verified.

This first dialogue turn is thus very critical since only speaker-independent recognition techniques can be used and since the perplexity (number of possible branching) of the identity input is, at least, proportional to the number of users. Conversely, in the rest of the spoken dialogue, the speech recognition has an easier task; the perplexity is lower.

### Summary of the invention

One aim of the invention is to provide a voice portal system and method with improved speaker authentication performances over existing methods and systems.

One other aim is to provide a speaker-dependent verification method in a voice portal system which allows for an accurate speaker recognition and verification based on an utterance spoken by the user during the first dialogue turn.

In accordance with one embodiment of the present invention, a speaker authentication method is provided in which a special dialogue has been designed in order to collect more data and to adapt the speech and silence models used for the first dialogue turn.

According to another aspect of the invention, a multi-pass speech recognition scheme is used to improve the adaptation of speech models.

According to another aspect of the invention, a speaker authentication method in a voice portal is provided, wherein the identity of said user is recognized, said method comprising the following successive steps in a dialogue:
(1) storing at least an utterance of one user of said portal in said portal,
(2) subsequently during said dialogue requesting said user to utter choices in a voice menu,
(3) subsequently adapting the speech and silence models used for recognizing the utterances of said user with said choices uttered by said user,
(4) using said adapted speech and silence models for authenticating said user using said utterance stored in said portal.

According to another aspect of the invention, a spoken dialogue is constructed that enables a delayed answer upon the user's speech input. As a matter of fact, in most applications of voice portals, a reliable user authentication is only needed for the delivery of security-critical information or for specific transactions that are usually carried out only after a few selections in the voice menu. Therefore, the user authentication can be postponed till that later point in the dialogue. Moreover, user authentication may be purely suppressed if the critical dialogue portion is not reached.

According to another aspect of the invention, the speech models used for speaker authentication are adapted during the spoken dialogue. This allows to perform the speaker authentication task with new speaker-dependent and session-dependent speech and silence models, and thus to improve the authentication accuracy.

According to another aspect of the invention, the first utterance is stored in the system in order to postpone its recognition and the verification of the user's identity until enough speech material has been collected to perform a speaker-dependent speech recognition and speaker verification. The first utterance can be normalized, multi-pass adaptation techniques can be used on it and the speech models can be adapted in order to improve the speaker authentication and speech recognition quality.

### Brief description of the drawing

The invention will be described with reference to the following drawing wherein:
Fig. 1 shows a schematized representation of a possible embodiment of a voice portal according to the invention.
Fig. 2 shows a flowchart illustrating a dialogue with the inventive voice portal.

### Detailed Description

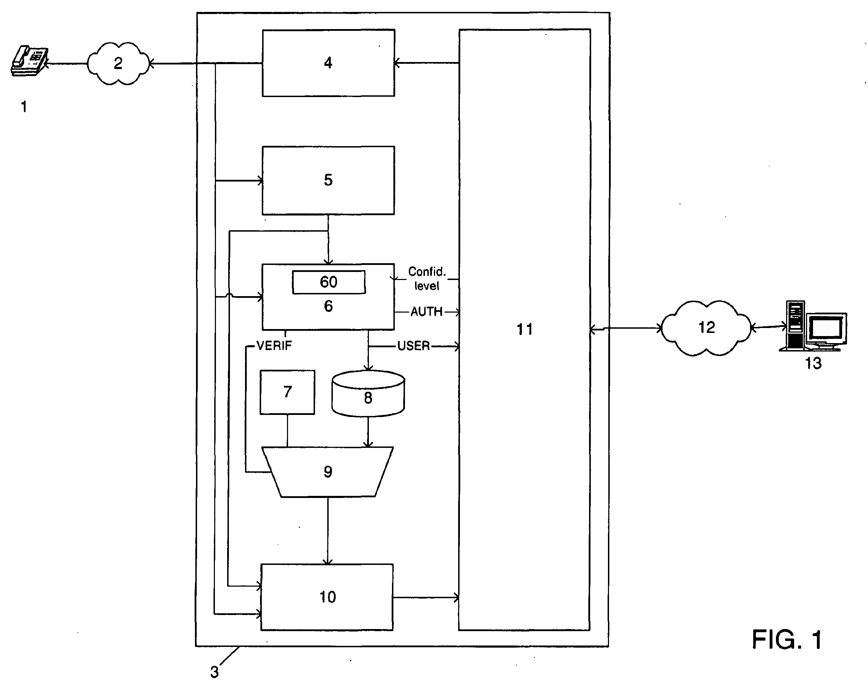

Fig. 1 shows a diagram of a telecommunication system including a voice portal hosting system 3. A plurality of users can establish a voice connection with this voice portal 3 over a public telecommunication network 2, such as a public switched telecommunication network (PSTN), an integrated services data network (ISDN), a mobile telecommunication network, e.g. a GSM network, or a voice-enabled IP-Network (VoIP). The connection is established by selecting the voice portal 3 phone number on a user terminal equipment 1 such as a phone terminal. Preferably, the voice portal phone number is a free business number in the 0800 range or, in a various embodiment, a charging number in the 0900 range. The voice portal 3 may give access to information and services from one or several service providers 13 connected permanently or occasionally to the portal over the second telecommunication network 12.

The voice portal hosting system includes a dialogue manager 11 for establishing a spoken dialogue with the user 1. The dialogue manager 11 answers to commands or requests uttered by the user with the requested information or service or by establishing a new connection with an external server.

User voice requests are recognized by a speech recognizer 10 that preferably uses HMM (Hidden Markov Models), adaptive neural networks or hybrids networks. In a preferred embodiment, the speech recognition module comprises Hidden Markov Models built with a toolkit such as the HTK toolkit.

A selector 9 can select speaker-independent speech models 7 or, as soon as the user has been identified, user-dependent speech models 8. User-dependent speech models usually allow for a faster and more reliable speech recognition than user-independent speech models, but can obviously only be used after user identification.

At least the first utterance spoken by the user during a session, but preferably all the user utterances, are stored in a temporary memory 5 and used by a speech models adaptation module 60 for improving the quality of the speech recognition and speaker authentication performed by the modules 10 and 6 respectively. As will be explained later, at least some utterances are stored in order to be recognized or to serve for an authentication using improvements of the speech models gained from subsequent utterances.

The user is identified and preferably authenticated by a speaker authentication module 6. The speaker authentication module preferably uses HMM (Hidden Markov Models), but could possibly use adaptive neural networks or hybrids networks. In a preferred embodiment, the speaker authentication module 6 comprises Hidden Markov Models built with a toolkit such as the HTK toolkit. In a preferred embodiment, the user identity is first recognized from the text corresponding to the utterances spoken using speaker-independent speech models, for example using the speech models 7. An active verification signal Verif is delivered as soon as the identity of the calling user is known. Speaker-dependant speech models 8 can be selected by the selector 9 and used by the speech recognizer 10 as soon as the signal Verif is active. The user identity is then verified in order to authenticate the user with an improved reliability; an authentication signal Auth becomes active when the user has been authenticated with the required confidence level.

Instead of collecting speaker-dependant speech models in the speaker-dependent database 8 during an enrolment session, adaptation techniques can be applied for improving the models available for speech recognition and speaker authentication. In this case, by using only a small amount of data from a new user, the speaker-independent model 7 can be adapted using maximum likelihood linear regression (MLLR) to fit the characteristics of each user. This adaptation can proceed incrementally as adaptation data becomes available (incremental adaptation).

The speech models used on each utterance for recognition and/or authentication are adapted during each session with the voice material stored in the temporary memory 5, as will be explained later. A second pass may be used on the first utterances for improving the recognition and/or authentication reliability using subsequently spoken voice material. The segmentation of the utterances may be improved with subsequent voice choices. A normalization of the speech segments may also be performed. New speech models, including for example new silence models, which are better adapted to the channel currently used, may be created from subsequent utterances and added to the set of models used for recognizing the first utterances and for authenticating the user from those utterances.

The speaker authentication module 6 and the speech recognizer 10 can be combined into one single module. The speaker authentication module may use additional information, for example data transmitted over a signalization channel such as the caller terminal identification, for example the CLI in a fixed network, the IP address in an Internet network or the IMSI (International Mobile Subscriber Identification) in a mobile network, in order to make easier the user identification/authentication task.

The confidence level needed for authenticating the user can preferably be set by the dialogue manager and/or by the operator of the voice portal 3, for example a service provider 13, depending on the requested security. A USER signal unambiguously indicates the user identified and/or authenticated by the module 6.

Several methods can be used independently or simultaneously for improving the authentication and recognition of the first utterance based on subsequent utterances:

### 1. Subsequent normalization techniques

Several normalization techniques (CMN, Energy normalization) can be applied within the inventive dialogue design. These normalization techniques work only when enough speech material is available to estimate the needed values of energy means or cepstral coefficients. In conventional voice response systems, these techniques are not used because they induce unacceptable delays in the dialogue interaction.

According to the invention, the user's first utterance is normalized using subsequent speech material, for example choices in a voice menu, uttered by the user. This allows for a more accurate speech recognition and speaker identification/verification algorithm.

### 2. Multi-pass adaptation techniques

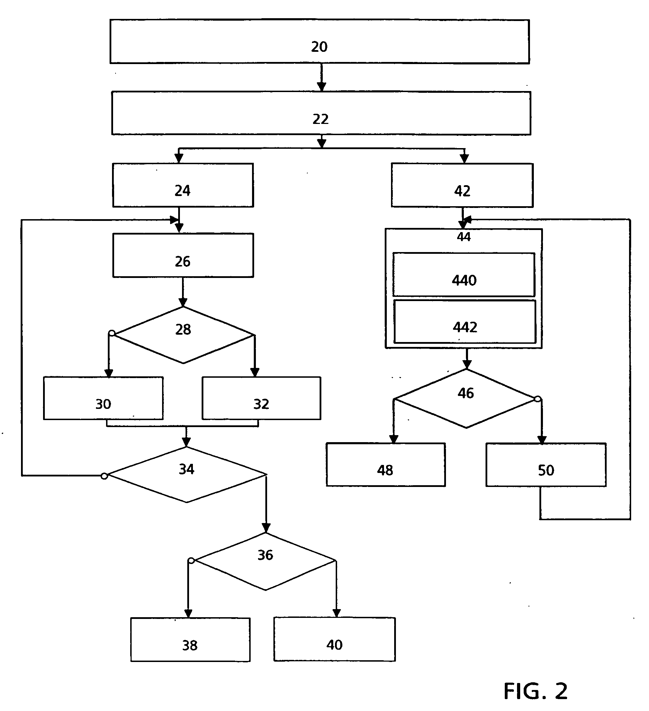

Figure 2 illustrates a specifically adapted dialogue between the user 1 and the inventive voice portal 3. The dialogue has been adapted in the sense that the dialogue manager will activate the final pass of the speech recognition and authentication process only when the user reaches a critical part of the dialogue.

The one skilled in the art will understand that, besides the improved user-interface, when this dialogue design is applied, many efficient speech recognition techniques can be applied to improve the perceived quality of the voice interaction.
1. During the first step 20, at the entry point of a personal voice portal, the user selects the voice portal 3 phone number in the network 2 and the call is established. The user is then requested to utter his user identification and/or password. The speech material and channel noise is collected and stored in the temporary memory 5 during step 22. No decision about the rejection of the user is made at this point of the dialogue. The claimed identity will only be verified later on, with known speaker verification methods, when the following conditions have been met:
   ■ The user wants to access a secure portion of the voice menu, and
   ■ The user's speech models have been adapted with subsequent speech material, and/or
   ■ Enough speech material has been collected from said user to allow for reliable speaker verification.
2. Two processes are then performed in parallel in the voice portal 3. In the first process, the user is given access to a free portion of the voice menu (step 24). This free portion may include for example access to non-confidential information from the service provider 13. The user can utter choices in this menu (step 26); speech material is collected in the memory 5. The dialogue proceeds with subsequent questions and answers by using speaker-independent speech recognition (step 30) as long as the user has not been identified.
   In a preferred embodiment, the user is provisionally recognized during steps 26-30 using for example a speaker-independent recognition of the text corresponding to the first utterance or non-speech elements such as the CLI, IMSI or IP terminal identification. The provisory identity is used in order to retrieve from the user profile database the user's speech and/or language models 8 used for improving the speech recognition accuracy during the dialogue, and will be verified later on, when needed, using known speaker verification methods in order to authenticate the user. Test 28 denotes a check of the Verif signal, which indicates if the user has already been identified and if speaker-dependant recognition algorithms can be used during step 32 for speech recognition.
   In another embodiment, an incremental adaptation technique is used for improving the speech model used for each turn of.the dialogue: Supervised adaptation techniques are preferably used if the user's answers can be expected (for example for choices in a closed menu list).
3. In a concurrent task within the system, the authentication flag Auth is initially reset (step 42). During step 44, the authentication module then tries to identify (step 440) and to authenticate (step 442) the user 1 using the first utterance spoken during the first exchange. Apart from the user's voice, other elements such as the terminal identification (CLI, IMSI, IP-address, etc.) may be used in order to help in the identification and authentication process.
   At least the first utterance, but preferably all speech inputs, is first segmented via a speaker-independent speech recognizer. The speech segments and non-speech signals are then used to adapt the speech/silence models via an adaptation technique like for instance MLLR.
4. For speech models, only the segments with an acceptable confidence level are used to provide supervised adaptation of model parameters. Unsupervised techniques may also be applied.
5. Subsequent recognition/adaptation passes may be performed during step 50 to further improve (i) the confidence level of the recognition and authentication system, (ii) the segmentation, and (iii) the adaptation of speech and silence models. In the case where the user number is composed of a digit string, the subsequent recognition passes are stopped when the error detection code grants permission.
6. As the dialogue reaches the critical security point (step 34) in the menu where a user authentication is requested in order for example to access more confidential information or to perform financial transactions, the final recognition and verification pass is processed and the user may be rejected from the service at this point.
   If the user has already been authenticated at this stage, he is given access to the secure portion of the voice menu (step 40). Otherwise, access is denied, or the user may be given a second try or requested to authenticate himself using another method, for example by uttering a password or entering a DTMF-PIN code on the keypad of his equipment (step 38).
   In the preferred embodiment illustrated in Figure 2, a succession of authentication passes 44 are iteratively performed while the user is navigating through the voice menu, until a predefined confidence level has been reached (test 46). The authentication flag is set when this level has been reached (step 48); otherwise an additional adaptation pass is performed (step 50). No access to secure portions of this menu is allowed until the user has been reliably authenticated. It is also possible to build a voice menu with a plurality of portions with different security requirements, different confidence levels for the user authentication being required for accessing said different portions.
   Thus, according to the invention, a very reliable user verification and a very accurate recognition of the first utterance can be performed, based on more speech material and using speech models adapted to the current speaker.
7. In the dialogue, there is no turn to explicitly accept the user. He is accepted by default.

The method uses the well-known fact that the accuracy of speaker-dependent speech recognition is higher than that of speaker-independent systems.

In the case of personal voice portals, the present invention uses several spoken utterances (as many as possible) to adapt the speech models to the speaker, and therefore postpones the decision till the user wants to access the secure portion of the voice menu. In a sense, it acts precisely as a fast on-line enrollment session.

The techniques 1 (subsequent normalization) and 2 (multi-pass adaptation) may be combined to achieve increased performance.

### 3. Improved speaker verification

During the elapsed time between the first dialogue turn and the critical security point, several command words may be used to complement the rejection/acceptation decision of the server system. In order to implement this additional verification scheme, the spoken command words of each session have to be stored within the authentication system and the authentication system extracts from them the model needed for the speaker verification procedure. In fact, these command words are used to create additional speech material for speaker verification. It is well known that, just as the speaker adaptation improves with the availability of more data, speaker verification improves equally with the increasing quantity of speech material.

The combination of all three methods contributes to improve the overall perceived quality of service.

As mentioned above and from the dialogue perspective, another obvious advantage is to improve the dialogue, since the rejection/acceptation dialogue is simply skipped in most cases. The dialogue is shorter and therefore more efficient.

In some cases and for some particular model parts, a higher adaptation speed has been measured with simpler models. The technique is used, for instance, for silence models adaptation.

### Example of implementation

At least some of the voice applications performed by the dialogue manager include voice-enabled e-commerce applications. The following example of implementation is about a banking teleservice. The user wishes to know the amount of money left on his bank account.

| **The user** | **The banking teleservice** |
|---|---|
| The user calls the banking service via the voice portal and from his hotel room. | |
| | The system: *Welcome to the banking service, please state your user number.* |
| The user: *3 4 6 1 2 4 9 3* | |
| | The system: *What kind of service do you want: Information on new services, information about your account, or would you like to transfer money?* |
| The user: *I would like information about my account* | |
| | The system: *Would you like to know the current account status or the latest transactions that have occurred* |
| The user: *I would like to know the current account status* | |
| | The verification of the claimed identity is now performed. The three sentences are used to adapt the speech and silence models. Additionally, the authentication system uses the digit string of the user number as well as the two subsequent sentences to infer if the user's claimed identity is correct. |
| | The system: *On the account number 3 4 6 12 4 9 3, the available amount is 4345.80 CHF.* |
| The user terminates the communication. | |

The voice portal 3 may comprise a standard digital computer including an internal memory (not shown) in which a computer program product can be directly loaded for performing the method steps of the invention when said program is run on said computer.

## Claims

1. Speaker authentication method in a voice portal (3), wherein the identity of said user is recognized, said method comprising the following successive steps in a dialogue:
(1) storing at least an utterance of one user of said portal in said portal (22),
(2) subsequently during said dialogue requesting said user to utter choices in a voice menu (26),
(3) subsequently adapting the speech and silence models used for recognizing the utterances of said user with said choices uttered by said user (50),
(4) using said adapted speech and silence models for authenticating said user using said utterance stored in said portal (442).

2. Method according to claim 1, further repeating said steps 2 to 4 until a predefined confidence level has been reached for the authentication of said user.

3. Method according to one of the preceding claims, in which the identity of said user is first recognized and then verified using said adapted speech and silence models for authenticating said user.

4. Method according to one of the preceding claims, in which the identity of said user is recognized from the text corresponding to said utterance.

5. Method according to the preceding claim, in which the identity of said user is recognized from the text corresponding to said utterance using speaker-independent voice recognition algorithms.

6. Method according to the claim 4, in which the identity of said user is recognized from the text corresponding to said utterance using said adapted speech and silence models.

7. Method according to one of the preceding claims, in which the identity of said user is recognized using text-independent speaker verification.

8. Method according to claim 3, in which the identity of said user is determined using data transmitted over the signaling channel.

9. Method according to the preceding claim, wherein said data include the CLI terminal's identification.

10. Method according to one of the preceding claims, wherein user-dependent speech models (8) are stored in said portal and retrieved as soon as said user has been identified in order to improve subsequent speech recognition and/or the verification of the user's identity.

11. Method according to the preceding claim, in which said user-dependent speech models are adapted using said choices uttered by said user.

12. Method according to one of the preceding claims, wherein the identity of said user is verified using said adapted speech models.

13. Method according to the preceding claim, wherein said user is authenticated using supervised speech models adaptation algorithms.

14. Method according to one of the preceding claims, wherein said speech models are adapted using an adaptation technique of Hidden Markov Models.

15. Method according to the preceding claim, wherein said speech models are adapted using MLLR adaptation techniques.

16. Method according to the preceding claim, wherein said choices are used for adapting said speech and silence models and therefore improving the segmentation of said utterance stored in said portal.

17. Method according to one of the preceding claims, wherein said user's utterance is normalized with subsequent speech material from said user.

18. Method according to one of the preceding claims, wherein new speech and silence models are created from said subsequently uttered user choices.

19. Method according to the preceding claim, wherein said new speech and silence models include silence models.

20. Method according to one of the preceding claims, wherein said user is prompted to utter his identity immediately after a connection has been established with said voice portal, said identity being stored as said utterance.

21. Method according to one of the preceding claims, wherein said user is only authenticated when he wants to access a secured portion of said voice menu.

22. Method according to one of the preceding claims, in which a plurality of portions with different security requirements have been defined in said voice menu,
and in which different confidence levels for said user authentication are defined for accessing said different portions of said voice menu.

23. Speech recognition method in a voice portal, comprising the following successive steps in a dialogue:
(1) storing at least an utterance of one user of said system in said portal,
(2) subsequently during said dialogue requesting said user to utter choices in a voice menu,
(3) subsequently adapting speech and silence models used for recognizing the utterances of said user with said choices uttered by said user,
(4) using said adapted speech and silence models for autenticating said user using said utterance stored in said portal.

24. Computer program product directly loadable into the internal memory of a digital computer, comprising software code portions for performing the steps of one of the preceding claims when said product is run on an interactive voice response system connected to a first telecommunication network.

25. Voice portal (3), comprising:
a speaker authentication module (6) comprising Hidden Markov speech and silence Models for authenticating users of said portal,
a dialogue manager (11) for managing a dialogue between said system and users (1) of said system, wherein said dialogue enables access to at least one secured portion in said system,
an adaptation module (60) for adapting said Hidden Markov Models,
wherein said dialogue manager is adapted to enable a dialogue in which said user authentication only happens when said user requests access to said secured portion, based on at least one first utterance uttered at the beginning of said dialogue and stored in said portal, and wherein said authentication is performed with said at least one first utterance and using adaptation of said speech and silence models based on subsequent speech material from said user.

26. Voice portal according to claim 25, wherein said at least one first utterance is normalized with subsequent speech material from said user.

27. Voice portal according to claim 25, wherein said speech material is used for adapting the speech and silence models and therefore improving the segmentation of said utterance stored in said portal.

## Patentansprüche

1. Verfahren zur Authentifizierung eines Sprecher in einem Sprachportal (3), in welchem Verfahren die Identität von dem besagten Benutzer erkannt wird, wobei das Verfahren die folgenden aufeinander folgenden Schritte in einem Dialog enthält:
(1) Speichern von mindestens einer Äusserung von einem Benutzer des besagten Portals im besagten Portal (22);
(2) darauf folgend während des Dialogs Abfragen des besagten Benutzers, Auswahl in einem Sprachmenü (26) zu treffen,
(3) darauf folgend Anpassen der Sprach- und Stillemodelle, welches für die Erkennung der Äusserungen des besagten Benutzers verwendet werden, mit besagter Auswahl, die von dem Benutzer geäussert wurden,
(4) Verwenden der besagten Sprach- und Stillemodelle, um besagten Benutzer zu authentifizieren, wobei die Äusserung, die in dem besagten Sprachportal (442) gespeichert sind, verwendet werden.

2. Verfahren entsprechend Anspruch 1, weiter umfassend Wiederholen der Schritte 2 bis 4, bis ein vordefiniertes Vertraulichkeitsniveau für die Authentifizierung des besagten Benutzers erreicht wurde.

3. Verfahren entsprechend einem der vorangegangenen Ansprüche, in welchem die Identität des besagten Benutzers zuerst erkannt und dann verifiziert wird, wobei während der Verifizierung die besagten angepassten Sprach- und Stillemodelle für die Authentifizierung des Benutzers verwendet wird.

4. Verfahren entsprechend einem der vorangegangenen Ansprüche, in welchem die Identität des besagten Benutzers von dem Text, der mit der besagten Äusserung korrespondiert, erkannt wird.

5. Verfahren entsprechend dem vorangegangenen Anspruch, in welchem die Identität des besagten Benutzers von dem Text, der mit der besagten Äusserung korrespondiert, erkannt wird, wobei sprecherunabhängige Spracherkennungsalgorithmen verwendet werden.

6. Verfahren entsprechend dem Anspruch 4, in welchem die Identität des besagten Benutzers von dem Text, der mit der besagten Äusserung korrespondiert, erkannt wird, wobei die besagten angepassten Sprach- und Stillemodelle verwendet werden.

7. Verfahren entsprechend einem der vorangegangenen Ansprüche, in welchem die Identität des besagten Benutzers erkannt wird, wobei textunabhängige Sprecherverifizierung verwendet wird.

8. Verfahren entsprechend dem Anspruch 3, in welchem die Identität des besagten Benutzers bestimmt wird, in dem Daten, die über einen Signalkanal übertragen werden, verwendet werden.

9. Verfahren entsprechend dem vorangegangenen Anspruch, in welchem besagte Daten eine DLI Terminalidentifikation enthalten.

10. Verfahren entsprechend einem der vorangegangenen Ansprüche, in welchem benutzerabhängige Sprachmodelle (8) in dem besagten Portal gespeichert werden und, sobald der Benutzer erkannt wurde, verwendet werden, um die darauf folgende Spracherkennung und/oder die Verifizierung der Benutzeridentität zu verbessern.

11. Verfahren entsprechend dem vorangegangenen Anspruch, in welchem die besagten sprecherabhängige Sprachmodelle angepasst werden, wobei die Auswahl, die von dem besagten Benutzer getroffen wurden, verwendet werden.

12. Verfahren entsprechend einem der vorangegangenen Ansprüche, in welchem die Identität des Benutzers unter Verwendung der besagten angepassten Sprachmodelle verifiziert wird.

13. Verfahren entsprechend dem vorangegangenen Anspruch, in welchem der Benutzer unter Verwendung von überwachten Adaptionsalgorithmen von Sprachmodellen authentifiziert wird.

14. Verfahren entsprechend einem der vorangegangenen Ansprüche, in welchem die Sprachmodelle unter Verwendung von einer Adaptionstechnik von versteckten Markovmodellen angepasst werden.

15. Verfahren entsprechend dem vorangegangenen Anspruch, in welchem besagten Sprachmodelle unter Verwendung von MLLR Adaptionstechniken angepasst werden.

16. Verfahren entsprechend dem vorangegangenen Anspruch, in welchem die besagte Auswahl verwendet wird, um die besagten Sprach-und Stillemodelle zu adaptieren und um damit die Segmentation der besagten Äusserung, die in dem besagten Portal gespeichert ist, zu verbessern.

17. Verfahren entsprechend einem der vorangegangenen Ansprüche, in welchem die Äusserung des Benutzers mit darauf folgenden Sprachmaterialien des besagten Benutzers normalisiert wird.

18. Verfahren entsprechend einem der vorangegangenen Ansprüche, in welchem neue Sprach- und Stillemodelle von der besagten darauf folgenden geäusserten Benutzerauswahl erzeugt werden.

19. Verfahren entsprechend dem vorangegangenen Anspruch, in welchem die besagten neuen Sprach- und Stillemodelle neue Stillemodelle enthalten.

20. Verfahren entsprechend einem der vorangegangenen Ansprüche, in welchem der besagte Benutzer unmittelbar nach der Etablierung einer Verbindung mit dem Sprachportal aufgefordert wird, seine Identität zu äussern, wobei die besagte Identität als besagte Äusserung gespeichert wird.

21. Verfahren entsprechend einem der vorangegangenen Ansprüche, in welchem der besagte Benutzer nur authentisiert wird, wenn er auf einen gesicherten Teil von dem besagten Sprachmenu zugreifen will.

22. Verfahren entsprechend einem der vorangegangenen Ansprüche, in welchem eine Vielzahl von Teilen mit verschiedenen Sicherheitsbestimmungen in dem besagten Sprachmenu definiert ist, und in welchem verschiedene Vertraulichkeitsniveaux für die besagte Benutzerauthentisierung definiert wird, um auf die besagten verschiedenen Teile des besagten Sprachmenus zuzugreifen.

23. Verfahren zur Spracherkennung in einem Sprachportal, wobei das Verfahren die folgenden aufeinander folgenden Schritte in einem Dialog enthält:
(1) Speichern von mindestens einer Äusserung von einem Benutzer des besagten Systems im besagten Portal;
(2) darauf folgend während des Dialogs Abfragen des besagten Benutzers, Auswahl in einem Sprachmenü zu treffen,
(3) darauf folgend Anpassen der Sprach- und Stillemodelle, welches für die Erkennung der Äusserungen des besagten Benutzers verwendet werden, mit besagter Auswahl, die von dem Benutzer geäussert wurden,
(4) Verwenden der besagten Sprach- und Stillemodelle, um besagten Benutzer zu authentifizieren, wobei die Äusserung, die in dem besagten Sprachportal (442) gespeichert sind, verwendet werden.

24. Computerprogrammprodukt, welche direkt in den internen Speicher eines digitalen Computers ladbar ist, umfassend Teile eines Softwarecodes, um die Schritte eines der vorgehenden Ansprüche auszuführen, wenn das besagte Produkt auf einem interaktiven Sprachantwortsystem, welches mit einem ersten Telekommunikationsnetz verbunden ist, ausgeführt wird.

25. Sprachportal (3), umfassend:
ein Sprecherauthentisierungsmodul (6), welches Versteckte Markovmodelle und Stillemodelle enthält, um die Benutzers des besagten Portals zu authentifizieren,
einen Dialogmanager (11), um einen Dialog zwischen dem besagten System und Benutzern (1) des besagten Systems zu managen, wobei der besagte Dialog einen Zugriff auf mindestens einen gesicherten Teil in dem besagten System ermöglicht,
ein Adaptionsmodul (60), um die besagten Versteckten Markovmodelle anzupassen,
wobei der besagte Dialogmanager angepasst ist, einen Dialog zu ermöglichen, in dem die besagte Benutzerauthentisierung nur geschieht, wenn der besagte Benutzer den Zugriff auf den besagten gesicherten Teil beantragt, basierend auf mindestens einer ersten Äusserung geäussert zu Beginn des besagten Dialogs und gespeichert in dem besagten Portal, und wobei die Authentisierung mit der besagten ersten Äusserung unter Verwendung der besagten Sprach- und Stillemodelle basierend auf dem darauf folgenden Sprachmaterial vom dem besagten Benutzer durchgeführt wird.

26. Sprachportal gemäss Anspruch 25, in welchem die besagte mindestens eine erste Äusserung mit darauf folgenden Sprachmaterial von dem besagten Benutzer normalisiert wird.

27. Sprachportal gemäss Anspruch 25, in welchem das besagte Sprachmaterial verwendet wird, um die Sprach- und Stillemodelle anzupassen und somit die Segmentierung der besagten Äusserung, die in dem besagten Portal gespeichert wird, zu verbessern.

## Revendications

1. Procédé d'authentification du locuteur dans un portail vocal (3), l'identité dudit utilisateur étant reconnue, ledit procédé comprenant les étapes successives suivantes dans un dialogue:
(1) stocker au moins une parole d'un utilisateur dudit portail dans ledit portail (22),
(2) par la suite, pendant ledit dialogue, demander audit utilisateur de prononcer des choix dans un menu vocal (26),
(3) adapter par la suite les modèles de voix et de silence utilisés pour reconnaître les paroles dudit utilisateur avec lesdits choix prononcés par ledit utilisateur (50),
(4) utiliser lesdits modèles de voix et de silence adaptés pour authentifier ledit utilisateur en utilisant ladite parole stockée dans ledit portail (44).

2. Procédé selon la revendication 1, répétant en outre lesdites étapes 2 à 4 jusqu'à ce qu'un niveau de confiance prédéfini ait été atteint pour l'authentification dudit utilisateur.

3. Procédé selon l'une des revendications précédentes, dans lequel l'identité dudit utilisateur est d'abord reconnue et ensuite vérifiée en utilisant lesdits modèles de voix et de silence adaptés pour authentifier ledit utilisateur.

4. Procédé selon l'une des revendications précédentes, dans lequel l'identité dudit utilisateur est reconnue à partir du texte correspondant à ladite parole.

5. Procédé selon la revendication précédente, dans lequel l'identité dudit utilisateur est reconnue à partir du texte correspondant à ladite parole en utilisant des algorithmes de reconnaissance vocale indépendants du locuteur.

6. Procédé selon la revendication 4, dans lequel l'identité dudit utilisateur est reconnue à partir du texte correspondant à ladite parole en utilisant lesdits modèles de voix et de silence adaptés.

7. Procédé selon l'une des revendications précédentes, dans lequel l'identité dudit utilisateur est reconnue en utilisant une vérification du locuteur indépendante du texte.

8. Procédé selon la revendication 3, dans lequel l'identité dudit utilisateur est déterminée en utilisant des données transmises sur le canal de signalisation.

9. Procédé selon la revendication précédente, dans lequel lesdites données comprennent l'identification du terminal CLI.

10. Procédé selon l'une des revendications précédentes, des modèles de voix (8) dépendants de l'utilisateur étant stockés dans ledit portail et récupérés aussitôt que ledit utilisateur a été identifié afin d'améliorer une reconnaissance vocale et/ou la vérification de l'identité de l'utilisateur ultérieures.

11. Procédé selon la revendication précédente, dans lequel lesdits modèles de voix dépendants de l'utilisateur sont adaptés en utilisant lesdits choix prononcés par ledit utilisateur.

12. Procédé selon l'une des revendications précédentes, l'identité dudit utilisateur étant vérifiée en utilisant lesdits modèles de voix adaptés.

13. Procédé selon la revendication précédente, ledit utilisateur étant authentifié en utilisant des algorithmes d'adaptation de modèles de voix supervisés.

14. Procédé selon l'une des revendications précédentes, lesdits modèles de voix étant adaptés en utilisant une technique d'adaptation de modèles de Hidden Markov.

15. Procédé selon la revendication précédente, lesdits modèles de voix étant adaptés en utilisant des techniques d'adaptation MLLR.

16. Procédé selon la revendication précédente, lesdits choix étant utilisés pour adapter lesdits modèles de voix et de silence et par conséquent améliorer la segmentation de ladite parole stockée dans ledit portail.

17. Procédé selon l'une des revendications précédentes, ladite parole de l'utilisateur étant normalisée avec du matériel vocal ultérieur dudit utilisateur.

18. Procédé selon l'une des revendications précédentes, lesdits nouveaux modèles de voix et de silence étant créés à partir desdits choix de l'utilisateur prononcés par la suite.

19. Procédé selon la revendication précédente, lesdits nouveaux modèles de voix et de silence comprenant des modèles de silence.

20. Procédé selon l'une des revendications précédentes, ledit utilisateur étant invité à prononcer son identité immédiatement après qu'une connexion a été établie avec ledit portail vocal, ladite identité étant stockée en tant que ladite parole.

21. Procédé selon l'une des revendications précédentes, ledit utilisateur étant uniquement authentifié lorsqu'il veut accéder à une portion sécurisée dudit menu vocal.

22. Procédé selon l'une des revendications précédentes, dans lequel une pluralité de portions avec différentes exigences de sécurité ont été définies dans ledit menu vocal,
et dans lequel différents niveaux de confiance pour l'authentification dudit utilisateur sont définis pour accéder auxdites différentes portions dudit menu vocal.

23. Procédé de reconnaissance vocale dans un portail vocal, comprenant les étapes successives suivantes dans un dialogue:
(1) stocker au moins une parole d'un utilisateur dudit système dans ledit portail,
(2) par la suite, pendant ledit dialogue, demander audit utilisateur de prononcer des choix dans un menu vocal,
(3) adapter par la suite des modèles de voix et de silence utilisés pour reconnaître les paroles dudit utilisateur avec lesdits choix prononcés par ledit utilisateur,
(4) utiliser lesdits modèles de voix et de silence adaptés pour authentifier ledit utilisateur en utilisant ladite parole stockée dans ledit portail.

24. Produit logiciel directement chargeable dans la mémoire interne d'un ordinateur numérique, comprenant des portions de code logiciel pour effectuer les étapes d'une des revendications précédentes lorsque ledit produit est exécuté sur un système interactif à réponse vocale connecté à un premier réseau de télécommunication.

25. Portail vocal(3), comprenant:
un module d'authentification de locuteur (6) comprenant des modèles de voix et de silence de Hidden Markov pour authentifier des utilisateurs dudit portail,
un gestionnaire de dialogue (11) pour gérer un dialogue entre ledit système et des utilisateurs (1) dudit système, ledit dialogue permettant l'accès à au moins une portion sécurisée dans ledit système.
un module d'adaptation (60) pour adapter lesdits modèles de Hidden Markov,
ledit gestionnaire de dialogue étant adapté pour permettre un dialogue dans lequel ladite authentification d'utilisateur n'a lieu que lorsque ledit utilisateur demande l'accès à ladite portion sécurisée, sur la base d'au moins une première parole prononcée au début dudit dialogue et stockée dans ledit portail, et ladite authentification étant effectuée avec ladite au moins une première parole et en utilisant une adaptation desdits modèles de voix et de silence sur la base de matériel vocal ultérieur dudit utilisateur.

26. Portail vocal selon la revendication 25, ladite au moins une première parole étant normalisée avec du matériel vocal ultérieur dudit utilisateur.

27. Portail vocal selon la revendication 25, ledit matériel vocal étant utilisé pour adapter les modèles de voix et de silence et par conséquent améliorer la segmentation de ladite parole stockée dans ledit portail.
